# FASCICULE DE BREVET EUROPEEN

(11) **EP 1 886 086 B1**
(45) Date de publication et mention de la délivrance du brevet: **28.12.2016**
(21) Numéro de dépôt: 06764684.4
(22) Date de dépôt: 24.05.2006
(51) Int. Cl.: F28D 9/00, F28F 9/007, F02B 29/04, F28D 9/02, F28F 3/08, F28F 9/00, F28F 21/06, F02M 31/20

(54) **ECHANGEUR DE CHALEUR COMPORTANT UN FAISCEAU D'ECHANGE DE CHALEUR LOGE DANS UN BOITIER**
WÄRMETAUSCHER MIT WÄRMETAUSCHERBLOCK ANGEORDNET IN EINEM GEHÄUSE
HEAT EXCHANGER COMPRISING A HEAT EXCHANGING BUNDLE ACCOMMODATED IN A HOUSING

(30) Priorité: 24.05.2005 FR 0505174; 22.12.2005 FR 0513124
(43) Date de publication de la demande: 13.02.2008
(73) Titulaire: VALEO SYSTEMES THERMIQUES, 78321 Le Mesnil St Denis Cedex (FR)
(72) Inventeur: MARTINS, Carlos, 78150 Le Chesnay (FR); POTIER, Michel, 78120 Rambouillet (FR)
(86) Numéro de dépôt international: PCT/FR2006/001192
(87) Numéro de publication internationale: WO 2006/125919

(56) Documents cités:
- EP-A- 1 288 606
- DE-A1- 19 853 455
- FR-A- 2 855 602
- US-A1- 2003 116 305
- US-B1- 6 474 408

## Description

L'invention se rapporte aux échangeurs de chaleur, et plus particulièrement aux échangeurs de chaleur à plaques pour les véhicules automobiles, par exemple les refroidisseurs d'air de suralimentation de moteurs à combustion interne turbo-compressés.

Elle concerne plus particulièrement un échangeur de chaleur conforme au préambule de la revendication 1. Un tel échangeur est connu, par exemple, du document EP 1 288 602 A2.

Il est connu, d'après DE 199902504 et JP 10238969, de réaliser le boîtier, qui loge le faisceau d'échange de chaleur, en matière plastique ou en aluminium moulé et de fermer ce boîtier par un couvercle soudé ou serti.

Lorsque l'on utilise un couvercle métallique, celui-ci peut être brasé sur le faisceau, ce qui permet alors d'assurer une étanchéité au passage des tubulures au travers du couvercle. Mais l'état métallurgique (recuit) du couvercle n'offre pas une tenue mécanique optimale. Dans les autres cas, il faut nécessairement prévoir une étanchéité au passage des tubulures au travers du couvercle.

Ainsi le recours à un couvercle pose des problèmes de tenue mécanique et/ou d'étanchéité.

L'invention a précisément pour objet un échangeur de chaleur du type défini précédemment qui remédie à ces inconvénients.

Ces buts sont atteints par le fait que l'échangeur de chaleur comprend une bride annulaire de serrage disposée en appui, d'une part, sur un bord d'appui du boîtier opposé à la paroi de fond et, d'autre part, sur un bord de la deuxième plaque d'extrémité du faisceau pour immobiliser le faisceau à l'intérieur du boîtier.

Il en résulte que le couvercle habituel du boîtier est supprimé, ce qui simplifie la fabrication de l'échangeur de chaleur et permet de s'affranchir des problèmes d'étanchéité des tubulures du liquide de refroidissement.

En effet, la bride annulaire de serrage assure conjointement la tenue mécanique du faisceau dans le boîtier, ainsi que l'étanchéité avec le boîtier et le faisceau. La forme annulaire de la bride de serrage permet aux tubulures d'entrée et de sortie du liquide de refroidissement de traverser librement l'anneau formé par la bride de serrage, ce qui résout les problèmes d'étanchéité posés par la traversée des couvercles des boîtiers de l'art antérieur par les tubulures d'entrée et de sortie du liquide de refroidissement. En variante, cependant, les tubulures précitées peuvent être issues de la bride annulaire d'étanchéité.

De manière avantageuse, le bord d'appui entoure le boîtier dans la région d'une face ouverte du boîtier, à l'opposé de la paroi de fond.

Un joint est avantageusement disposé dans une gorge de la bride de serrage pour assurer l'étanchéité du boîtier entre la deuxième plaque d'extrémité du faisceau et le bord d'appui du boîtier. La bride de serrage est de préférence fixée à la périphérie du bord d'appui du boîtier et comprime le joint entre deuxième plaque d'extrémité et le bord d'appui du boîtier.

Il est avantageux de prévoir une cale déformable qui est comprimée entre la première plaque d'extrémité du faisceau et la paroi de fond du boîtier par l'action de la bride de serrage sur la deuxième plaque d'extrémité du faisceau. Cette cale permet non seulement d'absorber le jeu entre la première plaque d'extrémité et la paroi de fond du boîtier, mais surtout d'éviter une dérivation du gaz entre la première plaque d'extrémité et la paroi de fond du boîtier.

La bride de serrage est avantageusement de forme rectangulaire. Elle est de préférence réalisée dans une matière plastique moulée.

Selon une autre caractéristique de l'invention, le faisceau est disposé dans le boîtier de façon que les orifices d'entrée et de sortie du gaz dans les premiers canaux soient respectivement en vis-à-vis de tubulures d'entrée et de sortie de gaz de l'échangeur.

Dans une réalisation avantageuse, le boîtier comporte deux parois latérales en renflement opposées l'une à l'autre délimitant avec la paroi de fond un premier espace pour l'entrée du gaz dans les premiers canaux et un deuxième espace pour la sortie du gaz des premiers canaux.

Les premiers canaux sont de préférence formés d'intercalaires ondulés disposés entre les plaques adjacentes du faisceau.

Pour améliorer l'échange de chaleur, on prévoit avantageusement que le chemin suivi par le liquide de refroidissement dans chaque deuxième canal soit un chemin en forme de lacet délimité par des nervures sur les plaques.

Dans une forme de réalisation de l'invention, les tubulures d'entrée et de sortie du liquide de refroidissement sont assujetties à la deuxième plaque d'extrémité et traversent librement l'anneau que forme la bride annulaire de serrage.

Dans une autre forme de réalisation de l'invention, les tubulures d'entrée et de sortie du liquide de refroidissement sont issues de la bride annulaire de serrage et débouchent respectivement en regard d'ouvertures d'entrée et de sortie du liquide de refroidissement ménagées dans la deuxième plaque d'extrémité.

L'échangeur de chaleur de l'invention est de préférence réalisé sous la forme d'un refroidisseur d'air de suralimentation d'un moteur à combustion interne turbo-compressé..

D'autres caractéristiques et avantages de l'invention apparaîtront encore à la lecture de la description qui suit d'exemples de réalisation donnés à titre illustratif et en référence aux dessins annexés, sur lesquels :
- la figure 1 est une vue éclatée en perspective d'un échangeur de chaleur selon une première forme de réalisation de l'invention ;
- la figure 2 est une vue montrant l'assemblage de la bride de serrage sur le bord d'appui du boîtier de la figure 1 ;
- la figure 3 est une vue de côté en coupe représentant l'ensemble des éléments assemblés de la figure 1 ;
- la figure 4 est une vue en perspective et en coupe du faisceau d'échange de chaleur de la figure 1 ;
- la figure 5 est une vue partielle de détail en coupe selon la ligne V-V de la figure 3 ;
- la figure 6 est une vue en coupe selon la ligne V-V de l'ensemble des éléments assemblés représenté à la figure 3;
- les figures 7 et 8 sont des vues respectivement en perspective et de dessus de l'ensemble monté représenté à la figure 1 ;
- la figure 9 est une vue éclatée en perspective d'un échangeur de chaleur selon une deuxième forme de réalisation de l'invention ;
- la figuré 10 est une vue en perspective de l'ensemble monté représenté à la figure 9 ; et
- la figure 11 est une vue en coupe, passant par l'axe de l'une des tubulures, montrant l'assemblage de la bride de serrage sur le bord d'appui du boîtier de l'échangeur de chaleur des figures 9 et 10.

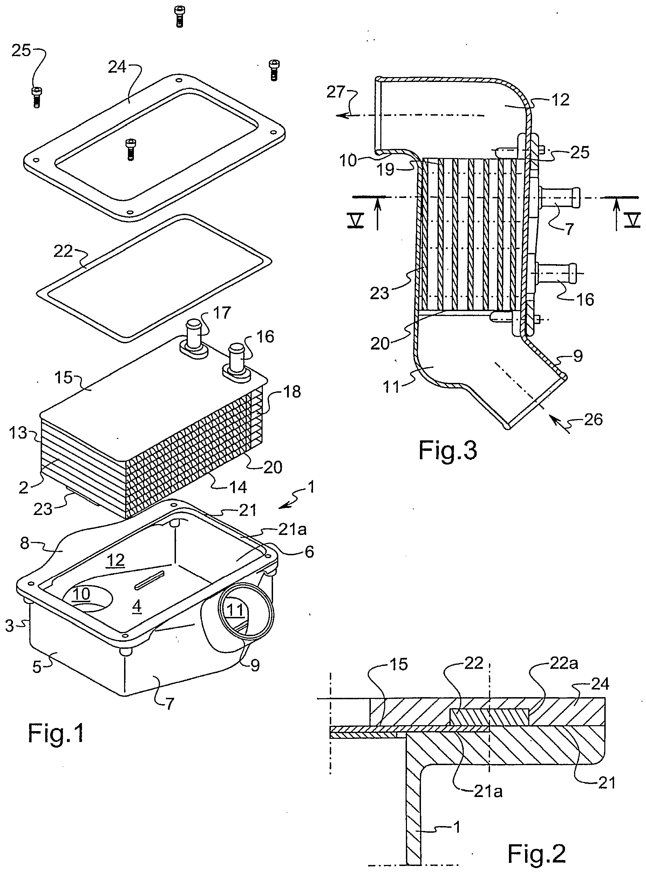

La figure 1 est une vue éclatée en perspective d'un échangeur de chaleur conforme à l'invention et qui est notamment utilisable comme refroidisseur d'air de suralimentation d'un moteur à combustion interne turbo-compressé de véhicule automobile. Dans cette application particulière, l'air de suralimentation est refroidi par un fluide, habituellement le liquide de refroidissement du moteur, pour pouvoir être admis dans le moteur à une température plus basse pour favoriser la combustion.

L'échangeur de chaleur comporte un boîtier 1 renfermant un faisceau de plaques d'échange de chaleur 2. Le boîtier 1 se compose d'un corps 3 formé d'une paroi de fond 4 généralement plane et de deux parois latérales planes parallèles 5, 6 en forme de rectangle sensiblement perpendiculaires à la paroi de fond 4 se prolongeant l'une vers l'autre sur chacune de leurs extrémités par deux parois en renflement 7, 8 dont la convexité est tournée vers l'extérieur du boîtier 2. Autrement dit, la paroi de fond est la paroi ou face du boîtier opposée à une ouverture permettant l'introduction d'un faisceau de plaques. Une tubulure d'entrée d'air 9 est prévue au sommet d'une des parois latérales en renflement 7 du boîtier et une tubulure de sortie d'air 10 est prévue sur la paroi de fond 4 à proximité de la paroi latérale en renflement 8 opposée. Les parois en renflement 7, 8 délimitent avec la paroi de fond 4 un premier espace formant une boîte à air d'entrée 11 et un deuxième espace formant une boîte à air de sortie 12 qui communiquent respectivement avec les tubulures d'entrée 9 et de sortie d'air 10 de l'échangeur.

Le faisceau 2 est constitué de plaques 13 parallèles entre elles, empilées les unes au dessus des autres entre une première plaque d'extrémité 14 en vis-à-vis avec la paroi de fond 4 du boîtier 2 et une deuxième plaque d'extrémité 15 par laquelle débouchent les tubulures d'entrée 16 et de sortie 17 d'un fluide de refroidissement. Ces tubulures 16 et 17 sont assujetties à la plaque d'extrémité 15 et assemblées à cette dernière, de préférence par brasage. Les plaques déterminent entre elles des premiers canaux 18 de circulation de l'air à refroidir 18 et des second canaux 19 de circulation du liquide de refroidissement montrés à la Figure 2.

Le faisceau 2 est disposé dans le boîtier 1 de façon que les orifices 20 d'entrée de l'air dans les premiers canaux 18 soient en vis-à-vis de la paroi en renflement 7 comportant la tubulure d'entrée d'air 9 de sorte que les orifices de sortie d'air des premiers canaux 18 se trouvent en vis-à-vis de la paroi en renflement 8 opposée. Le boîtier 2 est fermé par la deuxième plaque d'extrémité 15 du faisceau.

Comme le montre plus particulièrement la figure 2, le bord ouvert du boîtier opposé à la paroi de fond 4 délimite un bord d'appui 21 sur lequel repose, dans un épaulement 21a du bord d'appui, la deuxième plaque d'extrémité 15 du faisceau

Autrement dit, le bord d'appui 21 entoure le boîtier dans la région du bord ouvert, c'est-à-dire de sa face ouverte, en formant une collerette ou rebord délimitant une surface annulaire généralement plane. Ainsi, la deuxième plaque d'extrémité 15 ferme le boîtier 1.

La deuxième plaque d'extrémité 15 du faisceau est maintenue plaquée contre l'épaulement 21a sous l'action d'une bride de serrage 24 de forme annulaire fixée au boîtier par quatre vis 25. La profondeur de l'épaulement 21a est sensiblement égale à l'épaisseur de la deuxième plaque d'extrémité 15 de façon à définir pour la plaque d'extrémité 15 et le bord d'appui 21 un plan de joint commun pour un joint 22 disposé à l'intérieur d'une gorge 22a de la bride de serrage 24, ce qui permet d'assurer l'étanchéité du boîtier 1 avec l'extérieur. Ainsi, l'épaulement 21a défini un logement pour la deuxième plaque d'extrémité 15. Sous l'action de la bride de serrage 24, le joint 22 est appliqué à la fois contre la plaque d'extrémité 15 et contre le bord d'appui 21.

Autrement dit, la bride de serrage 24, qui comporte un contour fermé, suit à la fois le pourtour de la deuxième plaque d'extrémité 15 et celui du boîtier 1. Ainsi, la deuxième plaque d'extrémité 15 va se retrouver prise en sandwich entre le bord d'appui 21 et la bride de serrage 24.

Pour absorber le jeu entre la première plaque d'extrémité 14 et le fond 4 du boîtier il est prévu une cale déformable 23. Celle-ci est comprimée entre la première plaque d'extrémité 14 du faisceau et la paroi de fond 4 lorsque la bride de serrage 24 agit sur la deuxième plaque d'extrémité 15 du faisceau pour fermer le boîtier 2.

Comme on peut le voir en particulier sur la figure 3 où les éléments homologues à ceux des figures 1 et 2 portent les mêmes références, l'air de suralimentation pénètre dans l'échangeur par la tubulure d'entrée 9, comme schématisé par la flèche 26. Il parvient dans la boîte à air d'entrée 11 puis traverse le faisceau d'échange de chaleur 2 dont la structure sera décrite plus en détail ultérieurement en échangeant de la chaleur avec un fluide de refroidissement. Après avoir traversé le faisceau d'échange de chaleur 2, l'air de suralimentation refroidi parvient dans la boîte à air de sortie 12, puis quitte le refroidisseur d'air de suralimentation par la tubulure 10, comme schématisé par la flèche 27.

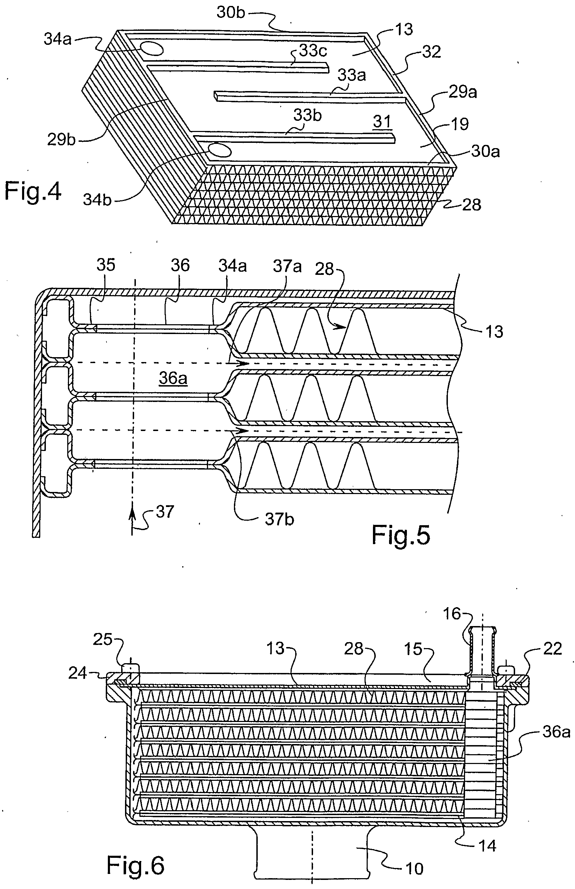

Le faisceau d'échange de chaleur (figure 4) est constitué par un empilement de plaques 13 entre lesquelles sont disposés des intercalaires ondulés 28 qui améliorent l'échange de chaleur entre l'air de suralimentation et les plaques. Chaque plaque 13 présente une forme sensiblement rectangulaire comportant deux petits côtés 29a, 29b et deux grands côtés 30a, 30b. Chaque plaque comporte une paroi de fond 31 limitée par un rebord périphérique 32. Des nervures 33a, 33b, 33c sont prévues dans la paroi de fond 31 de chacune des plaques afin de limiter des passes de circulation pour le liquide de refroidissement.

Dans l'exemple de la figure 4, le chemin suivi par le liquide de refroidissement présente une forme en lacet composé de deux demi-chemins en forme de U délimités par une nervure axiale 33a parallèle aux grands côtés 30a, 30b de la plaque et par deux nervures longitudinales 33b, 33c parallèles à la nervure axiale 33a et situées de part et d'autre de celle-ci. Les nervures 33a, 33b délimitent avec le bord relevé 29a de la plaque les deux branches parallèles du premier U et les nervures 33a, 33c délimitent les deux branches parallèles du deuxième U.

La paroi de fond 31 et le rebord périphérique 29a déterminent une cuvette peu profonde. Les plaques 13 groupées par paires sont assemblées par leur rebord périphérique 29a. De la sorte, la cuvette 31 de la plaque supérieure et la cuvette 31 de la plaque inférieure appartenant à une même paire de plaques 13 s'ajoutent pour constituer un canal 19 de circulation du liquide de refroidissement. Par ailleurs (figure 5), deux bossages 34a, 34b sont formés le long d'un petit côté 29b de chacune des plaques 13. Le fond 35 de chaque bossage 34a, 34b comporte un passage 36 de circulation pour le fluide de refroidissement.

Les bossages 34a, 34b d'une paire de plaques sont en appui sur les bossages 34a, 34b des paires de plaques adjacentes. On réalise ainsi un collecteur d'entrée 36a et un collecteur de sortie 36b pour le liquide de refroidissement. Le fluide de refroidissement pénètre dans le faisceau comme schématisé par la flèche 37 puis circule dans les canaux de circulation comme schématisé par les flèches. La sortie du fluide hors du faisceau d'échange de chaleur s'effectue en sens inverse.

Les bossages 34a, 34b de deux paires de plaques déterminent également entre eux des canaux de circulation pour le gaz à refroidir, l'air sortant du compresseur dans l'exemple décrit. Les intercalaires ondulés 28 améliorent l'échange de chaleur. Ils se présentent sous la forme d'intercalaires ondulés qui s'étendent jusqu'aux bossages 34a, 34b. Ces passages mettent directement en communication la boîte à air d'entrée 9 avec la boîte à air de sortie 12.

Un faisceau selon l'invention composé de plaques de refroidissement 13 et d'intercalaires 28 tels que décrits précédemment et monté dans un boîtier 1 est représenté par la vue en coupe de la figure 6 où les éléments homologues à ceux des figures précédentes portent les mêmes références. Cette figure fait apparaître la parfaite indépendance de la bride de serrage par rapport au faisceau qui assure conjointement l'étanchéité du boîtier et de la deuxième plaque d'extrémité 15 du faisceau. Ceci rend complètement indépendant les processus de fabrication du faisceau et du boîtier. Ceux-ci peuvent dès lors être assemblés par une bride de serrage obtenue dans un matériau différent, en plastique moulé par exemple, de ceux du faisceau et du boîtier.

Comme dans les représentations précédentes le faisceau est fixé sur le boîtier 1 par la bride 24 et par des vis 25. Cependant ce mode de fixation n'est pas unique et il peut être remplacé par tout autre moyen de serrage tel que des barrettes métalliques serties sur deux côtés du bord d'appui, par exemple. Il n'est pas non plus nécessaire que le bord de la deuxième plaque d'extrémité du faisceau soit en appui sur l'épaulement 21a sur toute sa périphérie, il peut également être en appui sur deux bords opposés du boîtier 1 ou en plusieurs points.

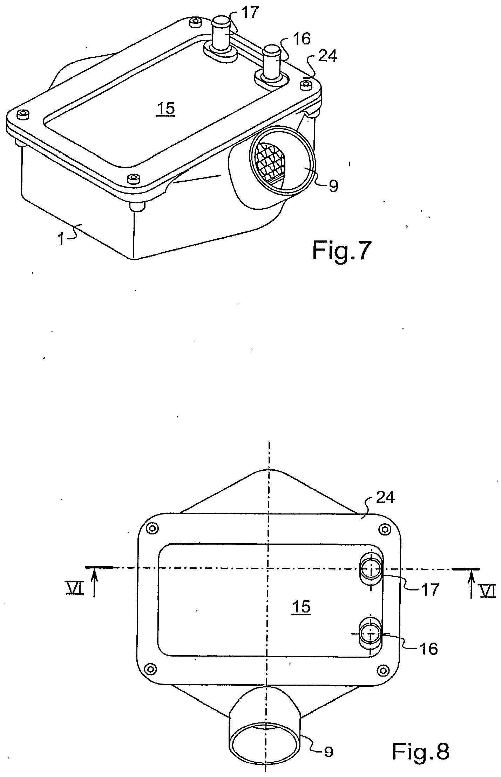

Les figures 7 et 8 qui sont des vues respectivement en perspective et de dessus d'un échangeur de chaleur selon l'invention montrent la simplicité du montage de la bride de serrage sur le boîtier et de sa parfaite indépendance avec le faisceau dont elle n'est en contact que par le joint torique 22, non représenté sur ces figures, qui est en appui contre la deuxième plaque d'extrémité 15. Comme on peut le voir aisément sur ces figures, la forme annulaire de la bride de serrage permet aux tubulures d'entrée et de sortie du liquide de refroidissement de traverser librement l'anneau formé par la bride de serrage ce qui résout les problèmes d'étanchéité posés par la traversée des couvercles des boîtiers de l'art antérieur par les tubulures d'entrée et de sortie du liquide de refroidissement.

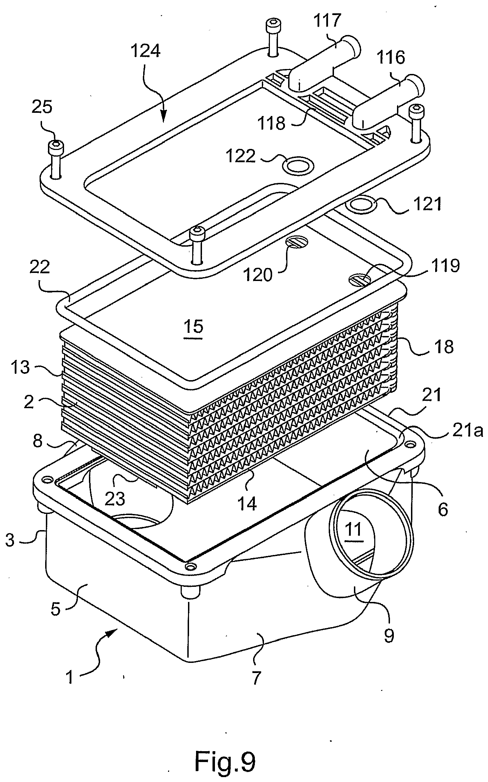

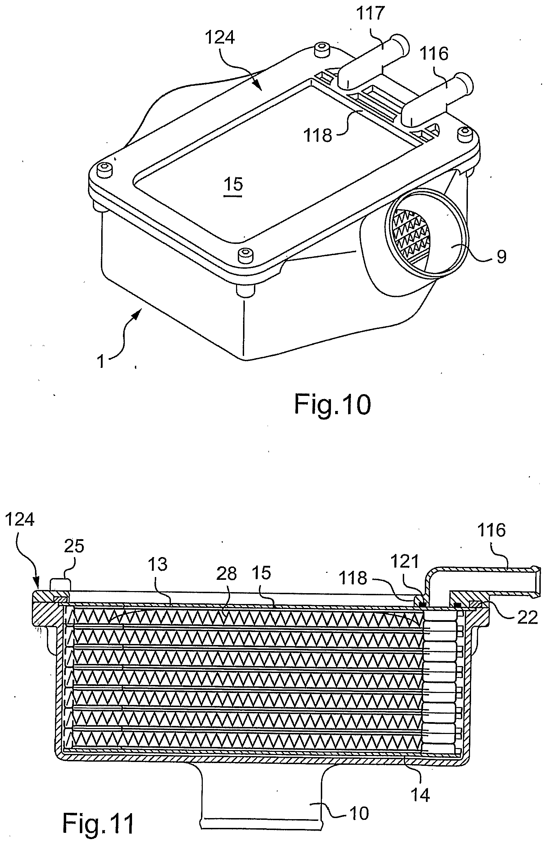

La forme de réalisation des figures 9 à 11 s'apparente étroitement à celle des figures 1 à 8 et les éléments communs sont désignés par les mêmes références numériques. L'échangeur de chaleur des figures 9 à 11 comporte des tubulures d'entrée 116 et de sortie 117 du liquide de refroidissement qui sont issues de la bride annulaire de serrage 124. Ces tubulures peuvent ainsi être moulées avec la bride de serrage, par exemple en matière plastique, et être réalisées avec la forme souhaitée. En particulier les tubulures 116 et 117 peuvent être réalisées coudées et présenter un faible encombrement. Comme on peut le voir sur les figures 9 et 11, les tubulures 116 et 117 sont rattachées à une partie ajourée 118 de la bride de serrage 124.

En outre, les tubulures 116 et 117 débouchent respectivement en regard d'ouvertures d'entrée 119 et de sortie 120 du liquide de refroidissement, ménagées dans la deuxième plaque d'extrémité 15 (figure 9). Des joints d'étanchéité 121 et 122 sont interposés entre les tubulures d'entrée 116 et de sortie 117 et les ouvertures d'entrée 116 et de sortie 117 pour garantir une étanchéité lors du montage. Dans l'exemple représenté, les joints 121 et 122 des tubulures d'entrée 116 et de sortie 117 sont distincts du joint 22 disposé dans la gorge 22a de la bride de serrage 124 (figure 11). Le joint 22 de la forme de réalisation des figures 9 à 11 est analogue au joint 22 de la forme de réalisation des figures 1 à 8.

Dans une variante de réalisation, non représentée, les joints d'étanchéité 121 et 122 des tubulures 116 et 117 pourraient être intégrés au joint 22 disposé dans la gorge 22a de la bride de serrage 124 pour former un ensemble d'étanchéité unique.

L'invention n'est pas limitée aux modes de réalisation décrits précédemment à titre d'exemple. Ainsi, le boîtier de l'échangeur de chaleur de l'invention pourrait, en variante, être intégré au plenum d'admission d'air du moteur.

En outre, l'échangeur de chaleur de l'invention peut trouver d'autres applications que le refroidissement de l'air de suralimentation de moteurs turbo-compressés.

## Revendications

1. Échangeur de chaleur comportant, d'une part, un faisceau d'échange de chaleur (2) constitué par un empilement de plaques embouties (13) disposées entre une première plaque d'extrémité (14) et une deuxième plaque d'extrémité (15) par laquelle ou lesquelles débouchent des tubulures d'entrée (16 ; 116) et de sortie (17 ; 117) d'un liquide de refroidissement, les plaques déterminant entre elles des premiers canaux (18) pour la circulation d'un gaz à refroidir et des second canaux (19) pour la circulation d'un liquide de refroidissement et, d'autre part, un boîtier (1) à l'intérieur duquel est logé le faisceau (2) au dessus d'une paroi de fond (4) du boîtier, ledit échangeur comprenant une bride annulaire de serrage (24 ; 124) disposée en appui, d'une part, sur un bord d'appui (21) du boîtier (1) opposé à la paroi de fond (4) et, d'autre part, sur un bord de la deuxième plaque d'extrémité du faisceau (15) pour immobiliser le faisceau (2) à l'intérieur du boîtier, **caractérisé en ce qu'**une cale déformable (23) est prévue entre la première plaque d'extrémité (14)et le fond du boîtier.

2. Échangeur de chaleur selon la revendication 1, **caractérisé en ce que** le bord d'appui (21) entoure le boîtier (1) dans la région d'une face ouverte du boîtier à l'opposé de la paroi de fond (4).

3. Échangeur de chaleur selon l'une des revendications 1 et 2, **caractérisé en ce qu'**il comprend un joint (22) disposé dans une gorge (22a) de la bride de serrage (24 ; 124) pour assurer l'étanchéité du boîtier (1) entre la deuxième plaque d'extrémité (15) du faisceau et le bord d'appui (21) du boîtier (1).

4. Échangeur de chaleur selon la revendication 3, **caractérisé en ce que** la bride de serrage (24 ; 124) est fixée à la périphérie du bord d'appui (21) du boîtier (1) et comprime le joint (22) entre la deuxième plaque d'extrémité (15) du faisceau (2) et le bord d'appui (21) du boîtier (1).

5. Échangeur de chaleur selon l'une des revendications 1 à 4, **caractérisé en ce qu'**il comprend une cale déformable (23) comprimée entre la première plaque d'extrémité du faisceau (14) et la paroi de fond (4) du boîtier par l'action de la bride de serrage (24 ; 124) sur la deuxième plaque d'extrémité (15) du faisceau (2).

6. Échangeur de chaleur selon l'une des revendications 1 à 5, **caractérisé en ce que** la bride de serrage (24 ; 124) est de forme rectangulaire.

7. Échangeur de chaleur selon l'une des revendications 1 à 6, **caractérisé en ce que** la bride de serrage (24 ; 124) est réalisée dans une matière plastique moulée.

8. Échangeur de chaleur selon l'une des revendications 1 à 7, **caractérisé en ce que** le faisceau (2) est disposé dans le boîtier (1) de façon que les orifices d'entrée et de sortie du gaz dans les premiers canaux (18) soient respectivement en vis-à-vis de tubulures d'entrée (9) et de sortie de gaz (10) de l'échangeur.

9. Échangeur de chaleur selon la revendication 8, **caractérisé en ce que** le boîtier (1) comporte deux parois latérales en renflement (7,8) opposées l'une à l'autre délimitant avec la paroi de fond (4) un premier espace (11) pour l'entrée du gaz dans les premiers canaux et un deuxième espace (12) pour la sortie du gaz des premiers canaux (18).

10. Échangeur de chaleur selon l'une des revendications 1 à 9, **caractérisé en ce que** les premiers canaux sont formés d'intercalaires ondulés (28) disposés entre les plaques adjacentes (13) du faisceau (2).

11. Échangeur de chaleur selon l'une des revendications 1 à 10, **caractérisé en ce que** le chemin suivi par le liquide de refroidissement dans chaque deuxième canal (19) est un chemin en forme de lacet délimité par des nervures (32, 33a, 33b, 33c) sur les plaques (13).

12. Échangeur de chaleur selon l'une des revendications 1 à 11, **caractérisé en ce que** les tubulures d'entrée (16) et de sortie (17) du liquide de refroidissement sont assujetties à la deuxième plaque d'extrémité (15) et traversent librement l'anneau que forme la bride annulaire de serrage (24).

13. Échangeur de chaleur selon l'une des revendications 1 à 11, **caractérisé en ce que** les tubulures d'entrée (116) et de sortie (117) du liquide de refroidissement sont issues de la bride annulaire de serrage (124) et débouchent respectivement en regard d'ouvertures d'entrée (119) et de sortie (120) du liquide de refroidissement ménagées dans la deuxième plaque d'extrémité (15).

14. Échangeur de chaleur selon la revendication 13, **caractérisé en ce que** des joints d'étanchéité (121, 122) sont interposés entre les tubulures d'entrée (116) et de sortie (117) et les ouvertures d'entrée (119) et de sortie (120).

15. Échangeur de chaleur selon les revendications 3 et 14, prises en combinaison, **caractérisé en ce que** les joints d'étanchéité des tubulures d'entrée (116) et de sortie (117) sont distincts du joint (22) disposé dans la gorge (22a) de la bride de serrage (124).

16. Échangeur de chaleur selon les revendications 3 et 14, prises en combinaison, **caractérisé en ce que** les joints d'étanchéité des tubulures d'entrée (116) et de sortie (117) sont intégrés au joint (22) disposé dans la gorge (22a) de la bride de serrage (24) pour former un ensemble d'étanchéité unique.

17. Échangeur de chaleur selon l'une des revendications 1 à 16, **caractérisé en ce qu'**il est réalisé sous la forme d'un refroidisseur d'air de suralimentation d'un moteur à combustion interne turbo-compressé.

## Patentansprüche

1. Wärmetauscher, der Folgendes umfasst: einerseits ein Wärmetauscherbündel (2), das durch einen Stapel tiefgezogener Platten (13), die zwischen einer ersten Stirnplatte (14) und einer zweiten Stirnplatte (15), in die Einlassröhren (16; 116) und Auslassröhren (17; 117) für eine Kühlungsflüssigkeit münden, angeordnet sind, gebildet ist, wobei die Platten zwischen sich erste Kanäle (18) für die Zirkulation eines zu kühlenden Gases und zweite Kanäle (19) für die Zirkulation einer Kühlungsflüssigkeit bestimmen, und andererseits ein Gehäuse (1), in dem sich das Bündel über einer Bodenwand (4) des Gehäuses befindet, wobei der Tauscher einen ringförmigen Falzsteg (24; 124) umfasst, der so angeordnet ist, dass er sich einerseits an einem Abstützrand (21) des Gehäuses (1) gegenüber der Bodenwand (4) und andererseits an einem Rand der zweiten Stirnplatte des Bündels (15) abstützt, um das Bündel (2) in dem Gehäuse unbeweglich zu machen, **dadurch gekennzeichnet, dass** zwischen der ersten Stirnplatte (14) und dem Boden des Gehäuses ein verformbarer Keil (23) vorgesehen ist.

2. Wärmetauscher nach Anspruch 1, **dadurch gekennzeichnet, dass** der Abstützrand (21) das Gehäuse (1) in dem Bereich einer offenen Fläche des Gehäuses gegenüber der Bodenwand (4) umgibt.

3. Wärmetauscher nach einem der Ansprüche 1 und 2, **dadurch gekennzeichnet, dass** er eine Dichtung (22) umfasst, die in einer Kehle (22a) des Falzstegs (24; 124) angeordnet ist, um die Dichtigkeit des Gehäuses (1) zwischen der zweiten Stirnplatte (15) des Bündels und dem Abstützrand (21) des Gehäuses (1) sicherzustellen.

4. Wärmetauscher nach Anspruch 3, **dadurch gekennzeichnet, dass** der Falzsteg (24; 124) am Umfang des Abstützrands (21) des Gehäuses (1) befestigt ist und die Dichtung (22) zwischen der zweiten Stirnplatte (15) des Bündels (2) und dem Abstützrand (21) des Behälters (1) komprimiert.

5. Wärmetauscher nach einem der Ansprüche 1 bis 4, **dadurch gekennzeichnet, dass** er einen verformbaren Keil (23) umfasst, der zwischen der ersten Stirnplatte des Bündels (14) und der Bodenwand (4) des Gehäuses durch die Wirkung des Falzstegs (24; 124) auf die zweite Stirnplatte (15) des Bündels (2) komprimiert wird.

6. Wärmetauscher nach einem der Ansprüche 1 bis 5, **dadurch gekennzeichnet, dass** der Falzsteg (24; 124) eine rechtwinklige Form hat.

7. Wärmetauscher nach einem der Ansprüche 1 bis 6, **dadurch gekennzeichnet, dass** der Falzsteg (24; 124) aus einem gegossenen Kunststoff verwirklicht ist.

8. Wärmetauscher nach einem der Ansprüche 1 bis 7, **dadurch gekennzeichnet, dass** das Bündel (2) in dem Gehäuse (1) in der Weise angeordnet ist, dass sich die Einlass- und Auslassöffnungen für das Gas in den ersten Kanälen (18) gegenüber den Einlassröhren (9) und Auslassröhren (10) für das Gas des Tauschers befinden.

9. Wärmetauscher nach Anspruch 8, **dadurch gekennzeichnet, dass** das Gehäuse (1) zwei einander gegenüber befindliche seitliche Verstärkungswände (7, 8) aufweist, die mit der Bodenwand (4) einen ersten Raum (11) für den Eintritt des Gases in die ersten Kanäle und einen zweiten Raum (12) für den Austritt des Gases aus den ersten Kanälen (18) begrenzen.

10. Wärmetauscher nach einem der Ansprüche 1 bis 9, **dadurch gekennzeichnet, dass** die ersten Kanäle aus gewellten Zwischenlagen (28) gebildet sind, die zwischen den benachbarten Platten (13) des Bündels (2) angeordnet sind.

11. Wärmetauscher nach einem der Ansprüche 1 bis 10, **dadurch gekennzeichnet, dass** der Weg, dem die Kühlungsflüssigkeit in jedem zweiten Kanal (19) folgt, ein Weg in Form einer Serpentine ist, die durch Rippen (32, 33a, 33b, 33c) auf den Platten (13) begrenzt ist.

12. Wärmetauscher nach einem der Ansprüche 1 bis 11, **dadurch gekennzeichnet, dass** die Einlassröhren (16) und Auslassröhren (17) für die Kühlungsflüssigkeit an die zweite Stirnplatte (15) gepresst sind und den Ring, den der ringförmige Falzsteg (24) bildet, frei durchqueren.

13. Wärmetauscher nach einem der Ansprüche 1 bis 11, **dadurch gekennzeichnet, dass** die Einlassröhren (116) und Auslassröhren (117) für die Kühlungsflüssigkeit von dem ringförmige Falzsteg (124) ausgehen und gegenüber Einlassöffnungen (119) bzw. Auslassöffnungen (120) für die Kühlungsflüssigkeit, die in der zweiten Stirnplatte (15) ausgespart sind, münden.

14. Wärmetauscher nach Anspruch 13, **dadurch gekennzeichnet, dass** die Dichtungen (121, 122) zwischen einerseits die Einlassröhren (116) und Auslassröhren (117) und andererseits die Einlassöffnungen (119) und Auslassöffnungen (120) eingefügt sind.

15. Wärmetauscher nach Anspruch 3 und 14 in Kombination, **dadurch gekennzeichnet, dass** die Dichtungen der Einlassröhren (116) und Auslassröhren (117) von der Dichtung (22), die in der Kehle (22a) des Falzstegs (124) angeordnet ist, verschieden sind.

16. Wärmetauscher nach den Ansprüchen 3 und 14 in Kombination, **dadurch gekennzeichnet, dass** die Dichtungen der Einlassröhren (116) und Auslassröhren (117) in die Dichtung (22), die in der Kehle (22a) des Falzstegs (24) angeordnet ist, integriert sind, um eine einzige Dichtungsanordnung zu bilden.

17. Wärmetauscher nach einem der Ansprüche 1 bis 16, **dadurch gekennzeichnet, dass** er in Form eines Ladeluftkühlers einer Turbolader-Brennkraftmaschine verwirklicht ist.

## Claims

1. Heat exchanger comprising, on the one hand, a heat exchanger core bundle (2) made up of a stack of pressed plates (13) arranged between a first end plate (14) and a second end plate (15) through which plate or plates liquid coolant inlet (16; 116) and outlet (17; 117) nozzles emerge, the plates between them determining first channels (18) for the circulation of a gas that is to be cooled and second channels (19) for the circulation of a liquid coolant and, on the other hand, a housing (1) inside which the core bundle (2) is housed on top of an end wall (4) of the housing, the said exchanger comprising an annular clamping flange (24; 124) arranged bearing, on the one hand, against a bearing edge (21) of the housing (1) which edge is opposite to the end wall (4) and, on the other hand, against an edge of the second end plate of the core bundle (15) so as to immobilize the core bundle (2) inside the housing, **characterized in that** a deformable spacer (23) is provided between the first end plate (14) and the end of the housing.

2. Heat exchanger according to Claim 1, **characterized in that** the bearing edge (21) surrounds the housing (1) in the region of an open face of the housing at the opposite end to the end wall (4).

3. Heat exchanger according to one of Claims 1 and 2, **characterized in that** it comprises a gasket (22) arranged in a groove (22a) of the clamping flange (24; 124) in order to seal the housing (1) between the second end plate (15) of the core bundle and the bearing edge (21) of the housing (1).

4. Heat exchanger according to Claim 3, **characterized in that** the clamping flange (24; 124) is fixed to the periphery of the bearing edge (21) of the housing (1) and compresses the gasket (22) between the second end plate (15) of the core bundle (2) and the bearing edge (21) of the housing (1).

5. Heat exchanger according to one of Claims 1 to 4, **characterized in that** it comprises a deformable spacer (23) compressed between the first end plate of the core bundle (14) and the end wall (4) of the housing by the action of the clamping flange (24; 124) on the second end plate (15) of the core bundle (2).

6. Heat exchanger according to one of Claims 1 to 5, **characterized in that** the clamping flange (24; 124) is rectangular in shape.

7. Heat exchanger according to one of Claims 1 to 6, **characterized in that** the clamping flange (24; 124) is made of a moulded plastic.

8. Heat exchanger according to one of Claims 1 to 7, **characterized in that** the core bundle (2) is arranged in the housing (1) in such a way that the inlet and outlet orfices for the gas in the first channels (18) respectively face gas inlet (9) and outlet (10) nozzles of the exchanger.

9. Heat exchanger according to Claim 8, **characterized in that** the housing (1) comprises two bulging lateral walls (7, 8) opposite one another and delimiting with the end wall (4) a first space (11) for gas to enter the first channels and a second space (12) for gas to leave the first channels (18).

10. Heat exchanger according to one of Claims 1 to 9, **characterized in that** the first channels are formed of corrugated inserts (28) arranged between the adjacent plates (13) of the core bundle (2).

11. Heat exchanger according to one of Claims 1 to 10, **characterized in that** the path followed by the liquid coolant along each second channel (19) is a winding path delimited by ribs (32, 33a, 33b, 33c) on the plates (13).

12. Heat exchanger according to one of Claims 1 to 11, **characterized in that** the liquid coolant inlet (16) and outlet (17) nozzles are secured to the second end plate (15) and pass freely through the annulus that the annular clamping flange (24) forms.

13. Heat exchanger according to one of Claims 1 to 11, **characterized in that** the liquid coolant inlet (116) and outlet (117) nozzles come from the annular clamping flange (124) and open respectively to face liquid coolant inlet (119) and outlet (120) openings formed in the second end plate (15).

14. Heat exchanger according to Claim 13, **characterized in that** gaskets (121, 122) are interposed between the inlet (116) and outlet (117) nozzles and the inlet (119) and outlet (120) openings.

15. Heat exchanger according to Claims 3 and 14 considered in combination, **characterized in that** the gaskets sealing the inlet (116) and outlet (117) nozzles are separate from the gasket (22) arranged in the groove (22a) of the clamping flange (124).

16. Heat exchanger according to Claims 3 and 14 considered in combination, **characterized in that** the gaskets sealing the inlet (116) and outlet (117) nozzles are incorporated into the gasket (22) arranged in the groove (22a) of the clamping flange (24) to form a single sealing system.

17. Heat exchanger according to one of Claims 1 to 16, **characterized in that** it is produced in the form of a charge air cooler for a turbo charged internal combustion engine.
